# EUROPEAN PATENT SPECIFICATION

(11) **EP 2 959 051 B1**
(45) Date of publication and mention of the grant of the patent: **16.10.2019**
(21) Application number: 13704950.8
(22) Date of filing: 19.02.2013
(51) Int. Cl.: D06F 39/12, D06F 39/04, D06F 39/00, A47L 15/42

(54) **WASHING MACHINE**
WASCHMASCHINE
MACHINE À LAVER

(43) Date of publication of application: 30.12.2015
(73) Proprietor: Electrolux Appliances Aktiebolag, 105 45 Stockholm (SE)
(72) Inventor: CAVARRETTA, Francesco, I-33080 Porcia (PN) (IT); DEL POS, Maurizio, I-33080 Porcia (PN) (IT); FAVARO, Daniele, I-33080 Porcia (PN) (IT); VIGNOCCHI, Massimiliano, I-33080 Porcia (PN) (IT)
(74) Representative: Electrolux Group Patents
(86) International application number: PCT/EP2013/053239
(87) International publication number: WO 2014/127799

(56) References cited:
- EP-A1- 2 471 434
- EP-A1- 2 471 994
- EP-A2- 1 584 734
- EP-A2- 2 206 824
- DE-A1- 4 313 539
- DE-A1-102010 029 873

## Description

The present invention relates to a washing machine for washing goods as, for example, a dish washing machine or a laundry washing machine.

In the present application, the washing machine can be a washing machine or a washing-drying machine (i.e. a washing machine which can both wash and dry the goods).

Washing-dryer machines carry out a washing phase and a drying phase of goods, such as laundry, contained in a processing chamber. The washing phase usually encompasses a treatment cycle comprising one or more washing cycles, one or more pre-washing cycle(s), rinsing cycle(s), and -in case of laundry-spinning cycle(s), and usually the drying phase immediately follows the washing phase. Washing machines carry out a washing phase only.

In a washing machine, it is known to use an electric heater to heat water to be used in a washing chamber.

In order to save energy consumption, it is also known to use a heat pump in place of or besides the electric heater for heating the water.

To improve efficiency of the washing heat pump and to avoid cooling down the ambient air it is also known to use a tank adapted to contain water or another fluid as a heat source for the washing heat pump, to be cooled down/solidified during heating of the process water.

A heat pump washing machine of the above disclosed type generally comprises:
- a chamber for receiving goods to be washed and possibly dried,
- a tank adapted to contain a fluid adapted to cool/solidify,
- a heat pump comprising a first heat exchanger, a second heat exchanger, a compressor and a pressure lowering device forming a circuit comprising a refrigerant, the first heat exchanger being adapted to heat said refrigerant and to cool/solidify said fluid, the second heat exchanger being adapted to cool said refrigerant and to heat process water to be used in the chamber.

EP 2 096 203 A1 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 A1 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 A2 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance.

During operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started.

European patent application 12178490.4 still secret at the date of first filing of the present application discloses a washing machine of the above disclosed type wherein the tank is fluidly connected to water mains by means of a conduit configured so as to supply tap water from the water mains to the tank bypassing the chamber.

EP 2 471 434 A1 discloses a household appliance such as a dish washer or a washer-drier comprising a heat pump system having a consenser, a part of which being enclosed on a water tank and an evaporator, a part of which being enclosed on a cold fluid reservoir; the cold fluid reservoir can contain water, that is transferred by a pump toward an air-heat exchanger suitable to condens the moisture contained in the air flowing from the washing chamber.

EP 2 471 994 A1 discloses a top adapted to match and close from above a cabinet of a laundry drying appliance, the top being formed as a ready-to-mount part ready to be mounted to the cabinet and forming a moisture condensing module for dehydrating drying air used to dry laundry within a drying drum of the laundry drying appliance, the top having a drying air inlet for receiving moisture-laden drying air, a drying air outlet for delivering dehydrated drying air, fluid passageways defined thereinside from said drying air inlet to said drying air outlet for the passage of the drying air to be dehydrated and moisture condensing means arranged inside said fluid passageways, wherein the top comprises, integrally formed therein, at least one structural part of the appliance, said at least one structural part of the appliance comprising at least one of the following:
- a part of a housing of a fan operable for propelling the drying air;
- a drying air delivery duct connectable to a drying air inlet of the drying drum for delivering the drying air into the drying drum;

- a seat for a container of detergents/softener for washing laundry;
- condense water collecting means for collecting condense water released by the moisture-laden drying air;
- at least part of a condense water draining system;
- a support for at least one water inlet valve for selectively allowing the intake of water from a water main;
- at least part of a water circuit for delivering water to clean the moisture condensing means.

It is an object of the invention to provide a top module for a washing machine with a heat pump.

It is a further object of the invention to provide an improved washing machine with a heat pump.

It is a further object of the invention to provide a washing machine with a heat pump with enhanced design and easiness of installation and/or upgrade of existing models.

The Applicant found that the above objects are achieved providing a top module for a cabinet of a washing machine embodying at least one of the two heat exchangers of a washing heat pump.

In an aspect, the invention relates to a washing machine comprising a cabinet and a self-contained and self-supporting top adapted to match and close from above said cabinet, the top being formed as a ready-to-mount part ready to be mounted to the cabinet, the washing machine housing:
- a chamber for receiving goods to be washed,
- a heat pump comprising a circuit comprising a refrigerant, a first heat exchanger, and a second heat exchanger, the first heat exchanger being adapted to heat said refrigerant and to cool/solidify a fluid adapted to cool down/solidify, the second heat exchanger being adapted to cool said refrigerant and to heat process water to be used in the chamber,
characterized in that the top module comprises at least one of:
-- a first tank adapted to hold an amount of said fluid adapted to cool down/solidify and housing a first portion of said refrigerant circuit immersed therein, embodying said first heat exchanger and
-- a second tank adapted to hold an amount of process water to be used in the chamber and housing a second portion of said refrigerant circuit immersed therein, embodying said second heat exchanger.

The top module may also comprise an expansion member of said refrigerant circuit.

The top module may also comprise a detergent drawer.

Said at least one of said first and second tank is advantageously defined at least in part by a top wall and a bottom wall of said top, and possibly by at least part of a peripheral wall and one or more inner partition wall(s) of said top.

Preferably, the first and second tanks are defined by a top wall, a bottom wall, a peripheral wall of said top and an inner partition wall preferably perpendicular to the top and bottom walls, the partition wall being made of a thermally insulator material.

Preferably, the fluid in the first tank is water.

The first tank may be a closed tank whose content is not changed within the framework of the normal process carried out by the washing machine.

Alternatively, the first tank may be an open tank, connected to the washing chamber to receive waste water.

As a further alternative, similarly to the already cited washing-dryer machine of European patent application 12178490.4**,** the first tank is an open tank directly fluidly connected to the water mains, that is by means of a conduit that bypasses the chamber, what enables to regenerate cooled/iced fluid in the tank by replacement with clean tap water also during operation of the washing heat pump.

Therefore, preferably the first tank has an input selectively connected to the water mains or to an outlet of the chamber for receiving goods, possibly via a recirculation means such as a pump.

Preferably, the first tank has an output selectively connected to the chamber for receiving goods, so that cooled water may be used to rinse the goods.

Preferably, the output of the first tank is selectively connected to the chamber for receiving goods through a detergent/softener drawer.

The second tank may have an input selectively connected to the water mains, and an outlet selectively connected to the chamber so that process water can be heated before entering the chamber.

In another embodiment, the second tank has an input selectively connected to the water mains and to an outlet of the chamber, and an outlet selectively connected to the chamber so that process water can be heated before entering the chamber and/or circulated through the second heat exchanger and the chamber to increase the rate of heating thereof.

Typically, circulation means such as a pump are provided for circulating the water from the outlet of the chamber and the inlet of the first or second tank.

Preferably, the output of the second tank is connected to the chamber selectively passing through a detergent/softener drawer.

Preferably, the compressor is housed in a bottom part of the cabinet or in a top part of the cabinet, below the top module.

In a preferred embodiment, the first heat exchanger comprises a tube arrangement adapted to aborb heat.

In a preferred embodiment, the second heat exchanger comprises a tube arrangement adapted to deliver heat.

In an embodiment, the refrigerant is adapted to evaporate inside the first heat exchanger and to condense inside the second heat exchanger.

In this embodiment, the first heat exchanger is an evaporator and the second heat exchanger is a condenser.

In another embodiment, the refrigerant operates nonconventional cycles, as for instance carbon dioxide, and does not undergo a phase change (i.e., condensation and evaporation) in the first heat exchanger and second heat exchanger.

The refrigerant is advantageously circulated through said circuit. Suitably, said circuit is a closed recirculation circuit.

Suitably, the washing machine comprises a water inlet circuit for inputting tap water into the first and/or the second tank and/or into a detergent drawer and/or into the chamber for receiving goods. The water inlet circuit is advantageously fluidly connected to the top of the chamber.

In an embodiment, the second tank is fluidly connected to a water circuit conducting the process water into the chamber.

In an embodiment, the water circuit is a recirculation circuit adapted to drain water from the chamber and to return it back into the chamber at another location. Suitably, the recirculation circuit comprises a pump and a pipe arrangement. This solution enables to recirculate the water through the recirculation circuit, which is thermally coupled to the refrigerant at the second heat exchanger, till a desired process temperature is reached.

In another embodiment, the second tank is fluidly connected to a water circuit adapted to draw water directly from the water mains, bypassing the chamber, and to deliver it into the chamber (without recirculation). In this embodiment, tap water from water mains is heated by the refrigerant at the second heat exchanger before entering the chamber. The second heat exchanger thus operates only on contact with tap water.

Suitably, the washing machine comprises a water outlet circuit for discharging waste water (i.e. used water) from the chamber and/or from the first tank. The water outlet circuit is advantageously fluidly connected to the bottom of the chamber.

The water outlet circuit can comprise draining pipes and optionally a draining pump, adapted for discharging waste water from the chamber after process cycles (e.g. washing, rinsing cycles) and/or from the first tank when regeneration of the water is necessary or desired.

Advantageously, the washing machine further comprises a control unit configured to control means for circulating the refrigerant and/or for controlling the path(s) and/or flow(s) of said fluid and/or of said process water and to control operation of the rest of the washing machine.

The control unit is advantageously configured to i.a. manage entry of tap water from the water mains into the second tank and/or the detergent drawer and/or directly into the chamber for receiving goods based on a current washing cycle and/or based on the temperature of the tap water; and is configured to manage exit of the waste water from the chamber to a discharge pipe or to the first tank.

The control unit is also advantageously configured to i.a. manage regeneration of the fluid in the first tank, cooled/iced during operation of the heat pump. Suitably, the control unit is configured to manage entry of tap water from the water mains and/or waste water from the chamber into the first tank and to manage exit of at least part of the water cooled at the first heat exchanger to the water outlet and/or to the detergent water and/or to the chamber for a cold water washing or rinsing cycle. This, with the purpose of melting any ice formation in the tank and at least partially replacing cooled water in the tank with tap water at a higher temperature, and optionally to save water.

In a preferred embodiment, the control unit is configured to operate the washing heat pump so that the fluid in the tank is at least partially freezed. In this way, the latent heat of the phase transition from fluid to solid is advantageously used and the washing heat pump efficiency is improved.

Features and advantages of the present invention will be more readily understood from the following detailed description of a preferred embodiment thereof, which is provided below by way of non-limiting example with reference to the accompanying drawings, wherein:
- FIG. 1 diagrammatically shows a washing machine according to the invention;
- FIG. 2 shows an embodiment of a washing machine according to the invention, with a top module according to the invention partly broken away and separated from a cabinet thereof; and
- FIG. 3 shows the washing machine of FIG. 2 with the top module partly broken away and assembled with the cabinet.

Like elements are denoted by like reference signs throughout the Figures.

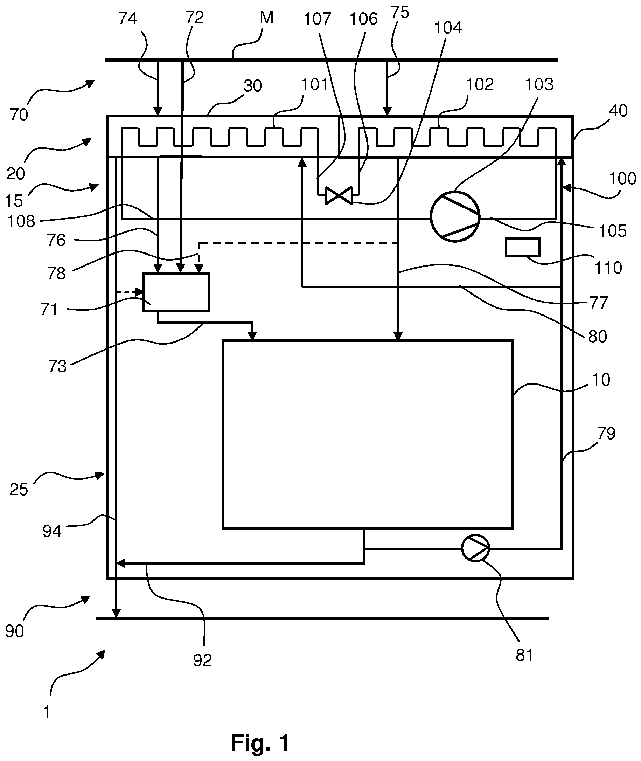

FIG. 1 shows an embodiment of the components of a washing machine 1 according to the invention, having a heat pump for heating the washing water.

A washing machine treats goods (typically laundry or dishes) during a washing phase wherein the goods are washed with water and possible additives, and/or a drying phase, generally subsequent to the washing phase, wherein the goods are dried at least in part.

Washing machine 1 comprises a chamber 10 for treating goods, a first tank 30 adapted to contain a fluid or preferably a fluid/solid mixture, and a washing heat pump 15 adapted to absorb heat from the fluid contained in the first tank 30 and to release heat to water to be used in the chamber 10 during a washing phase, also referred to as process water hereinafter.

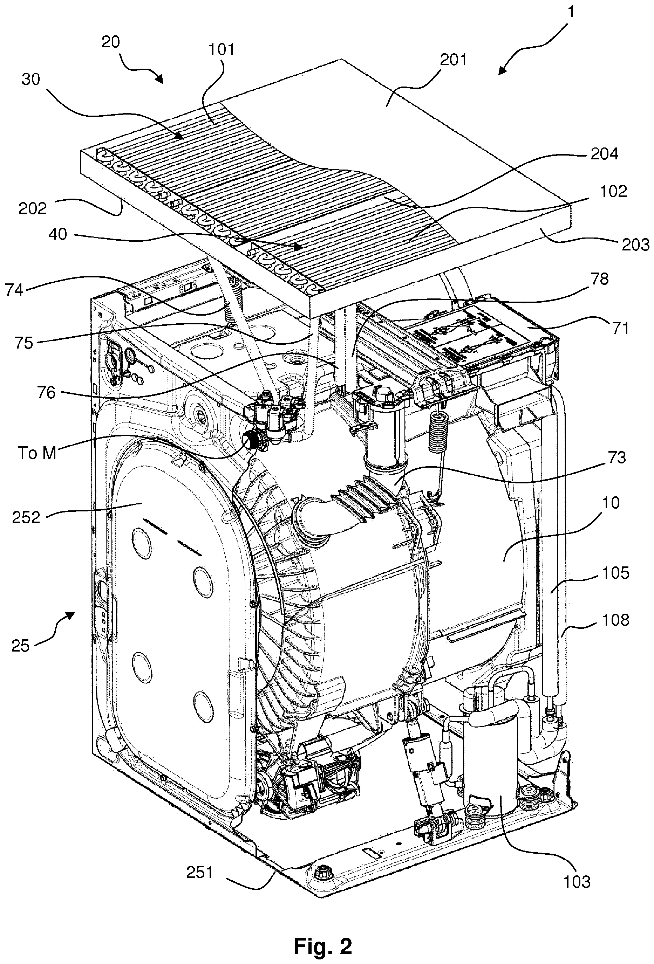

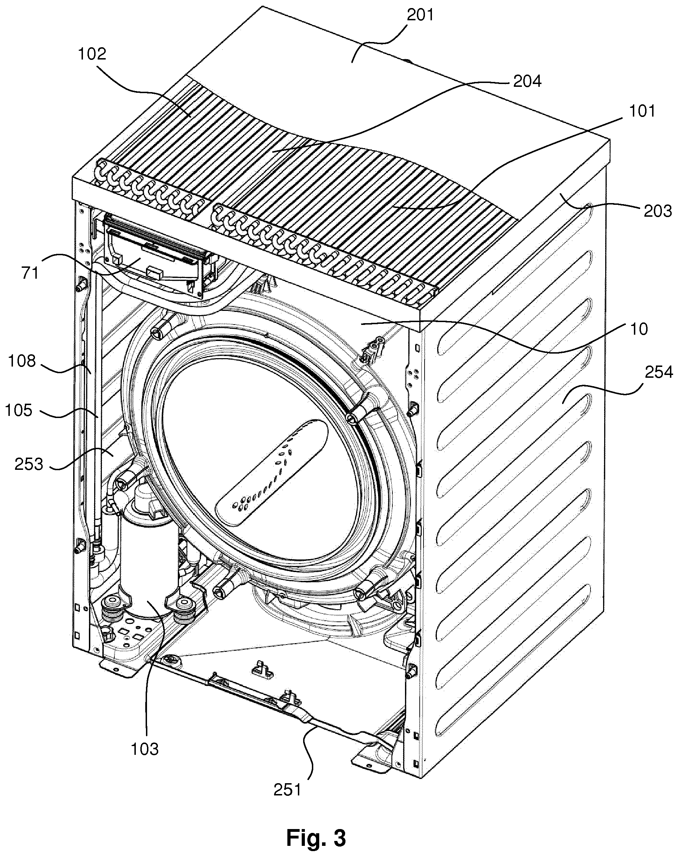

In the case of a laundry washing machine, the chamber 10 can be a drum (not shown), optionally perforated, which is rotatably contained in a tub (shown at reference 10 in FIGs. 2 and 3).

As can be recognized from FIG. 2 and 3, washing machine 1 comprises a cabinet 25 comprising a bottom wall 251, a front wall (not shown), a rear wall 252, and lateral walls 253, 254.

A top module or top 20 is adapted to match and close from above cabinet 25 of the washing machine, the top 20 being formed as a ready-to-mount part ready to be mounted to the cabinet 25.

According to an embodiment of the invention, the first tank 30 is housed in and preferably forms part of top 20.

The washing machine comprises a water outlet circuit 90 for discharging waste water (i.e. used water optionally mixed with washing products) from the chamber 10 and/or from the first tank 30 after process cycles (e.g., washing, rinsing cycles).

The water outlet circuit 90 can comprise a draining pump (not shown) and draining pipes 92, 94.

The draining pipe 92 is fluidly connected to an outlet of the chamber 10, advantageously to the bottom of the chamber 10.

The draining pipe 94 is fluidly connected to an outlet of first tank 30.

The washing machine 1 advantageously further comprises a water inlet circuit 70 (only diagrammatically shown) adapted to supply water, that can be optionally mixed with washing products, into the chamber 10. The water inlet circuit 70 advantageously comprises a drawer 71 and water inlet pipes 72, 73, 74, 75.

The water inlet pipes 72 and 73 fluidly connect water mains M to the chamber 10 via the drawer 71.

The drawer 71 is adapted to be filled with products, for example detersives, softener, bleaching, sparkling/rinse aid substances, etc. The drawer 71 can comprise one or more compartments (not shown) for one or more products from which a certain amount of these products, depending on the washing program/cycle, is delivered into the chamber 10.

The water inlet pipe 74 fluidly connects water mains M to first tank 30 when first tank 30 is an open tank and water/ice is used inside first tank 30.

The water inlet pipe 75 fluidly connects water mains M to a second tank 40.

According to an embodiment of the invention, the second tank 40 is also housed in and preferably forms part of top 20.

A pipe (not shown) directly connecting water mains M to chamber 10 may also be provided.

A pipe 76 may fluidly connect the outlet of first tank 30 to the drawer 71 so as to reach the chamber 10 via the pipe 73. This fluid connection may be used when cold process water is desired into chamber 10 such as for a cold washing or rinsing cycle.

An outlet of the second tank 40 is fluidly connected to the chamber 10, through a pipe 77, optionally through drawer 71 (pipes 78 and 73).

The outlet of the chamber 10 is optionally fluidly connected, besides to the water discharge circuit 90, to an inlet of second tank 40 through a pipe 79 and/or to an inlet of first tank 30 through a pipe 80.

Advantageously, a pump 81 is inserted in pipe 79 and used to circulate water between the chamber 10 and the second tank 40.

Switching and/or flow rate controlling valves, such as electrovalves, are suitably provided to control the path(s) and flow rate(s) of water in the above described pipes.

A refrigerant circuit 100 comprises a first circuit portion 101 housed within first tank 30 and a second circuit portion 102 housed within second tank 40.

Refrigerant circuit 100 further comprises a compressor 103, and optionally an expansion element 104.

The compressor 103 is shown in an upper part of cabinet 25 in FIG. 1, above chamber 10, but it can also be housed elsewhere alongside chamber 10 or in a bottom part of cabinet 25, under chamber 10 as shown in FIGs. 2, 3.

Expansion element 104 can be an electrovalve as an expansion valve that may be a thermostatic or electronic valve, or a capillary tube.

As an alternative to the above described open first tank 30 adapted to hold an amount of tap water/ice, the tank 30 can be a closed tank 30 whose content is not changed (besides the change of state) within the framework of the normal process carried out by the washing machine.

In still another alternative, the first tank 30 can have an input that may be selectively, such as through an electrovalve, put in fluid connection with water mains M (pipe 74), put in fluid connection with waste water from the chamber 10 (pipe 80), or be closed.

As said, the tank 30 can have an output fluidly connected, preferably selectively, such as through an electrovalve, to the water outlet circuit 90 (pipe 94) in order to drain away cooled/iced liquid or fluid from the first tank 30 via the water outlet circuit, or to chamber 10 via drawer 71 (pipes 76, 73) .

It is noted that the fluid contained in the tank 30 advantageously is tap water and/or waste process water, possibly mixed with the above mentioned products.

In the case of a closed first tank 30, it can instead store a suitable fluid capable of cooling down/solidify releasing a sufficient amount of heat to the refrigerant circulating in the first refrigerant circuit portion 101 such as, for example, glycol, which has the advantage of a low freezing point.

Alternatively, the fluid contained in the tank 30 can comprise a carrier fluid and a frost protection agent that lowers the freezing point of the mixture compared with the freezing point of the pure carrier fluid. In this way, cooling to lower temperatures can be accomplished while heat is delivered to washing heat pump 15, either to just above or to or below the freezing point.

As another alternative, the fluid contained in the tank 30 can comprise a carrier fluid and a freezing-point-increasing agent, that increases the freezing point of the mixture compared with the pure carrier fluid and thus works in more convenient thermodynamics conditions.

The amount of fluid contained in the first tank 30 and the volume of the first tank 30 depend on the amount of water that must be heated up during a washing process cycle of the washing machine 1, the temperature required for the process water, and the percentage of frozen fluid in the tank 30. Refrigerant circuit 100, first tank 30 and second tank 40 embody a heat pump 15 whereby process water is heated at second tank 40: at first tank 30 the refrigerant is warmed and tap or waste water is cooled down/freezed, embodying a first heat exchanger or evaporator; and at second tank 40 the refrigerant is cooled and process water is heated embodying a second heat exchanger or condenser.

Namely, during operation of the washing heat pump 15 (that is, when the compressor 103 is switched-on), heat is generated at the condenser or second tank 40, i.e. released to the process water, and cold is generated at the evaporator or first tank 30, i.e. heat is subtracted from the fluid within first tank 30.

More in detail, the refrigerant is pumped from the compressor 103, usually trough a connecting pipe 105, to the condenser or second circuit portion 102, where liquefaction takes place accompanied by release of heat. The released heat is used to warm water to be used in the chamber 10. From the condenser or second circuit portion 102 the refrigerant passes, usually trough a connecting pipe 106 and via the pressure lowering device 104, and usually trough a connecting pipe 107, to the evaporator or first circuit portion 101 where the refrigerant evaporates whilst absorbing heat from the fluid contained in the first tank 30. From the evaporator or first circuit portion 101 the refrigerant runs back, usually trough a connecting pipe 108, to the compressor 103.

The first circuit portion 101 can comprise a pipe or a series of pipes properly shaped and immersed in the fluid contained in the first tank 30.

The refrigerant of the washing heat pump 15 is properly selected so as to have an evaporation temperature below the solidification point of the fluid within first tank 30. In the case of water being contained in first tank 30, having an icing point of 0°C, the evaporation temperature of the refrigerant should be lower than 0°C, as better detailed hereinafter.

Thus, within evaporator or first heat exchanger 30, 101, the refrigerant recovers thermal energy from the first tank 30, cooling down and icing the water or other fluid contained therein. The thermal energy is transferred to the washing or process water via condenser or second heat exchanger 40, 102.

Considering that during operation of the washing heat pump 15, ice (if any) is inclined to build up around the coil of evaporator or first heat exchanger 30, 101, if the first tank 30 is not a closed tank then its input and output are preferably positioned sufficiently far apart from the coil so as to prevent any obstruction of the input and output due to ice formation.

The condenser or second heat exchanger 40, 102 can be a plate heat exchanger or similar fluid to fluid heat exchanger. The process water to be used in the chamber 10 is made to flow through the condenser or second heat exchanger 40, 102 so that it exchanges thermal energy with the refrigerant of heat pump 15.

The process water can be continuously recirculated by pump 81 through the condenser or second heat exchanger 40, 102 and back to the chamber 10 until the desired temperature is reached. Process water is preferably drained from the chamber 10 from the bottom via pipe 79 and returned back into the chamber 10 via pipes 77 or 78, 73 at another location, preferably at an upper location, via the condenser or second heat exchanger 40, 102 and possibly via drawer 71, as shown.

Alternatively, tap water can be heated directly, by flowing through the condenser or second heat exchanger 40, 102, before entering into the chamber 10. In this case, pipe 75 is adapted to directly drain tap water from the water mains M bypassing the chamber 10, to conduct the tap water through the condenser or second heat exchanger 40, 102 and then via pipe 77 (or 78) into the chamber 10, without recirculation, so that pump 81 and pipe 79 are missing. In this embodiment, the condenser or second heat exchanger 40, 102 operates without being in contact with waste water.

The washing machine 1 and especially its washing heat pump 15 may feature further provisions and/or additional components to improve the efficiency of the washing phase.

The washing machine 1 suitably comprises a control unit 110 configured to control operation of the washing-dryer machine 1.

When the washing machine 1 is turned on in order to perform a predetermined goods treating program, the control unit 110 is advantageously configured to control the components of the washing machine 1, notably the washing heat pump 15 and process water circulation pump 81 where provided for. Control unit 110 is also configured to operate any switching device and/or flow rate controlling device, such as the various electrovalves described herein.

In particular, the control unit 110 may be configured to control start/stop of tap water entry from the water mains M and start/stop of water exit to the water outlet circuit 90 in order to make process water available and/or, when water is used within first tank 30, to perform water regeneration within first tank 30 for further usage as thermal energy source, namely with the purpose of melting any ice formation in the first tank 30 and replacing at least part of the cooled water with tap water at a higher temperature.

Starting/stopping tap water entry into the washing machine 1 can be performed by the control unit 110 by opening/closing at least one suitable valve (not shown) and switching on/off a draining pump where provided for, such as pump 81.

Control unit 110 is configured to switch the washing heat pump 15 on any time water has to be heated for use in the chamber 10 in order to perform a process cycle (e.g., washing, rinsing, and similar) of the predetermined program.

The control unit 110 is also advantageously configured to switch the washing heat pump 15 off when the process water reaches a desired process temperature or when the fluid in the first tank 30 reaches a predetermined condition (for example, when it is in large part iced).

The fluid in the first tank 30 exchanges sensible heat with the refrigerant in first circuit portion 101 during a cooling phase of the fluid and latent heat during a liquefying or solidifying or icing phase (if any). The exploitation of the latent heat allows reducing the amount of fluid required and therefore the overall dimensions of the first tank 30. Accordingly, the control unit 110 is advantageously configured to operate the washing heat pump 15 so that the fluid in the first tank 30 is at least partially freezed.

Depending on the program design, heat pump power, and wash temperature, the washing heat pump 15 alone might be insufficient to heat the water up to the desired process temperature in the available/desired time. Therefore, a conventional electrical heater (not shown) may be comprised in the washing-dryer machine 1 as well. The conventional electrical heater can be suitably positioned at the bottom of the chamber 10.

In order to guarantee that the desired process temperature is reached for the desired amount of process water, the heat exchanger 40, 102 and the flow rate of the process water therein should be suitably sized. The refrigerant flowing within the circuit 100 of heat pump 15 should be capable of releasing the proper amount of heat at the second tank 40.

The refrigerant flowing within washing heat pump 15 should therefore be capable of receiving a proper amount of heat in the remainder of the heat pump circuit. Complete evaporation of the refrigerant should also be ensured in order to safeguard the compressor 103 from damages that would possibly be caused if liquid particles of refrigerant entered thereinto.

FIG. 2 shows an embodiment of a washing machine 1 according to the invention, with top module or top 20 according to the invention separated from cabinet 25. It is highlighted that the top is formed of first and second tanks 30, 40.

Some of the various pipes are shown extending between the top 20 and the components of the washing machine housed in the cabinet 25, notably pipes 73-76, 78, 105, 108.

FIG. 3 shows the washing machine 1 of FIG. 2 with the top 20 assembled with the cabinet 25.

As shown, the top 20 comprises and preferably is comprised of the first tank 30 and the second tank 40, joined at a respective side thereof.

Alternatively, the expansion element 104 can also be housed in top 20 instead of in an upper part of cabinet 25 as shown.

In addition or alternatively, the drawer 71 can also be housed in top 20 instead of in an upper part of cabinet 25 as shown.

Top 20 comprises a top wall 201, partly broken away in FIGs. 2 and 3, a bottom wall 202, a peripheral wall 203 and an inner partition wall 204.

The partition wall 204 is preferably perpendicular to the top and bottom walls 201, 202 and is made of a thermally insulator material so as to define the first and second tanks 30, 40.

According to the invention, those walls 201-204 of the top 20 define the first tank 30 and the second tank 40 so that the top 20 is formed of the first and second tanks 30, 40.

The partition wall 204 avoids any direct exchange of water between tanks 30 and 40, though water may be exchanged between the two tanks through chamber 10 at times other than when process water is being heated at heat exchanger 40: as said above, waste water from chamber 10 may replace iced water in tank 30, and/or cold water from tank 30 may be used in chamber 10 for certain goods treatment cycles.

In this sense, the two tanks 30, 40 are fluidly insulated from each other.

Moreover, any thermal exchange between tanks 30 and 40, besides that performed by heat pump 15, is avoided by partition wall 204, or at least is negligible with respect to both (i) the thermal exchange within the first heat exchanger 30, 101 between the fluid contained in the first tank 30 and the refrigerant in the first portion 101 of the refrigerant circuit, and (ii) the thermal exchange within the second heat exchanger 40, 102 between the process water contained in the second tank 40 and the refrigerant in the second portion 102 of the refrigerant circuit.

In other embodiments, not shown, only one of first tank 30 and second tank 40 can be housed in / form part of top 20.

In that case, the only tank is preferably defined at least in part by top wall 201 and bottom wall 202 of the top module 20, and possibly by at least part of a peripheral wall 203 and one or more inner partition wall(s), like wall 204, of said top 20.

The only tank 30, respectively 40, may thus be formed also in a central region of top module 20.

It will be appreciated that the design of the washing machine 1 allows a very fast and comfortable installation because all connections are at the top of washing machine 1.

Moreover, top module 20 may be easily replaced e.g. too much limestone accumulates over refrigerant circuit portions 101, 102.

## Claims

1. A washing machine (1) comprising a cabinet (25) and a self-contained and self-supporting top (20) adapted to match and close from above said cabinet (25), the top (20) being formed as a ready-to-mount part ready to be mounted to the cabinet (25), the washing machine (1) housing:
- a chamber (10) for receiving goods to be washed,
- a heat pump (15) comprising a circuit (100) comprising a refrigerant, a first heat exchanger (30, 101), and a second heat exchanger (40, 102), the first heat exchanger (30, 101) being adapted to heat said refrigerant and to cool/solidify a fluid adapted to cool down/solidify, the second heat exchanger (40, 102) being adapted to cool said refrigerant and to heat process water to be used in the chamber (10),
**characterized in that** the top (20) comprises at least one of:
-- a first tank (30) adapted to hold an amount of said fluid adapted to cool down/solidify and housing a first portion (101) of said refrigerant circuit (100) immersed therein, embodying said first heat exchanger and
-- a second tank (40) adapted to hold an amount of process water to be used in the chamber (10) and housing a second portion (102) of said refrigerant circuit (100) immersed therein, embodying said second heat exchanger.

2. The washing machine (1) of claim 1, wherein the top module further comprises an expansion member (104) of said refrigerant circuit (100).

3. The washing machine (1) of any of claims 1-2, wherein the top module further comprises a detergent drawer (71).

4. The washing machine (1) of any of claims 1-3, wherein said at least one of said first and second tank (30, 40) is defined at least in part by a top wall (201) and a bottom wall (202) of said top (20), and possibly by at least part of a peripheral wall (203) and one or more inner partition wall(s) (204) of said top (20).

5. The washing machine (1) of any of claims 1-4, wherein the top (20) comprises both the first and second tanks (30, 40) and wherein the first and second tanks (30, 40) are defined by a top wall (201), a bottom wall (202), a peripheral wall (203) of said top and an inner partition wall (204), the partition wall being made of a thermally insulator material.

6. The washing machine (1) of any of claims 1-5, wherein the fluid in the first tank (30) is water.

7. The washing machine (1) of claim 6, wherein the first tank (30) has an input selectively connected (74, 80) to the water mains (M) or to an outlet of the chamber (10) for receiving goods, possibly via a recirculation means such as a pump (81) .

8. The washing machine (1) of any of claims 6-7, wherein the first tank (30) has an output selectively connected (73, 76) to the chamber (10) for receiving goods.

9. The washing machine (1) of claim 8, wherein the output of the first tank (30) is selectively connected (73, 76) to the chamber (10) for receiving goods through a detergent/softener drawer (71).

10. The washing machine (1) of any of claims 1-9, wherein the second tank (40) has an input selectively connected (75) to the water mains (M), and an outlet selectively connected (77; 78, 73) to the chamber (10).

11. The washing machine (1) of any of claims 1-9, wherein the second tank (40) has an input selectively connected (75, 79) to the water mains (M) and to an outlet of the chamber (10), and an outlet selectively connected (77; 78, 73) to the chamber (10).

12. The washing machine (1) of any of claims 1-11, wherein circulation means (81) are provided for circulating the water from the outlet of the chamber (10) and the inlet of the first or second tank (30, 40).

13. The washing machine (1) of any of claims 1-12, wherein the output of the second tank (40) is connected (78, 73) to the chamber (10) selectively passing through a detergent/softener drawer (71).

14. The washing machine (1) of any of claims 1-13, wherein the compressor (103) is housed in a bottom part of the cabinet (25) or in a top part of the cabinet (25), below the top (20).

## Patentansprüche

1. Waschmaschine (1), umfassend ein Gehäuse (25) und ein in sich abgeschlossenes und selbsttragendes Oberteil (20), das geeignet ist, zu dem Gehäuse (25) zu passen und dasselbe von oben zu schließen, wobei das Oberteil (20) als ein montagefertiges Teil ausgebildet ist, das bereit ist, an dem Gehäuse (25) befestigt zu werden, wobei Folgendes in der Waschmaschine (1) untergebracht ist:
- eine Kammer (10) zum Aufnehmen des Waschguts,
- eine Wärmepumpe (15), die einen Kreislauf (100) umfasst, der ein Kältemittel, einen ersten Wärmetauscher (30, 101) und einen zweiten Wärmetauscher (40, 102) umfasst, wobei der erste Wärmetauscher (30, 101) geeignet ist, das Kältemittel zu erhitzen und eine zum Kühlen/Verfestigen geeignete Flüssigkeit zu kühlen/zu verfestigen, wobei der zweite Wärmetauscher (40, 102) geeignet ist, das Kältemittel zu kühlen und in der Kammer (10) zu verwendendes Prozesswasser zu erhitzen,
**dadurch gekennzeichnet, dass** das Oberteil (20) Folgendes umfasst:
-- einen ersten Behälter (30), der geeignet ist, eine Menge der zum Kühlen/Verfestigen geeigneten Flüssigkeit aufzunehmen und einen ersten Abschnitt (101) des in demselben eingetauchten Kältemittelkreislaufs (100) zu enthalten, und der den ersten Wärmetauscher verkörpert und/oder
-- einen zweiten Behälter (40), der geeignet ist, eine Menge des in der Kammer (10) zu verwendenden Prozesswassers aufzunehmen und einen zweiten Abschnitt (102) des in demselben eingetauchten Kältemittelkreislaufs (100) zu enthalten, und der den zweiten Wärmetauscher verkörpert.

2. Waschmaschine (1) nach Anspruch 1, wobei das obere Modul ferner ein Erweiterungselement (104) des Kältemittelkreislaufs (100) umfasst.

3. Waschmaschine (1) nach einem der Ansprüche 1 bis 2, wobei das obere Modul ferner eine Waschmittellade (71) umfasst.

4. Waschmaschine (1) nach einem der Ansprüche 1 bis 3, wobei der erste und/oder der zweite Behälter (30, 40) wenigstens zum Teil durch eine obere Wand (201) und eine untere Wand (202) des Oberteils (20) und unter Umständen durch wenigstens einen Teil einer umlaufenden Wand (203) und eine oder mehrere innere Trennwände (204) des Oberteils (20) definiert sind bzw. ist.

5. Waschmaschine (1) nach einem der Ansprüche 1 bis 4, wobei das Oberteil (20) sowohl den ersten als auch den zweiten Behälter (30, 40) umfasst und wobei der erste und der zweite Behälter (30, 40) durch eine obere Wand (201), eine untere Wand (202), eine umlaufende Wand (203) des Oberteils und eine innere Trennwand (204) definiert sind, wobei die Trennwand aus einem wärmeisolierenden Material hergestellt ist.

6. Waschmaschine (1) nach einem der Ansprüche 1 bis 5, wobei es sich bei der Flüssigkeit in dem ersten Behälter (30) um Wasser handelt.

7. Waschmaschine (1) nach Anspruch 6, wobei der erste Behälter (30) einen Eingang aufweist, der selektiv mit der Hauptwasserleitung (M) oder mit einem Auslass der Kammer (10) zum Aufnehmen von Gut, unter Umständen über ein Zirkulationsmittel, wie zum Beispiel eine Pumpe (81), verbunden (74, 80) ist.

8. Waschmaschine (1) nach einem der Ansprüche 6 bis 7, wobei der erste Behälter (30) einen Ausgang aufweist, der selektiv mit der Kammer (10) zum Aufnehmen von Gut verbunden (73, 76) ist.

9. Waschmaschine (1) nach Anspruch 8, wobei der Ausgang des ersten Behälters (30) über eine Waschmittel-/ Weichspülerlade (71) selektiv mit der Kammer (10) zum Aufnehmen von Gut verbunden (73, 76) ist.

10. Waschmaschine (1) nach einem der Ansprüche 1 bis 9, wobei der zweite Behälter (40) einen Eingang, der selektiv mit der Hauptwasserleitung (M) verbunden (75) ist, und einen Auslass, der selektiv mit der Kammer (10) verbunden (77; 78, 73) ist, aufweist.

11. Waschmaschine (1) nach einem der Ansprüche 1 bis 9, wobei der zweite Behälter (40) einen Eingang, der selektiv mit der Hauptwasserleitung (M) und mit einem Auslass der Kammer (10) verbunden (75, 79) ist, und einen Auslass, der selektiv mit der Kammer (10) verbunden (77; 78, 73) ist, aufweist.

12. Waschmaschine (1) nach einem der Ansprüche 1 bis 11, wobei Zirkulationsmittel (81) zum Zirkulieren des Wassers aus dem Auslass der Kammer (10) und dem Einlass des ersten oder des zweiten Behälters (30, 40) vorgesehen sind.

13. Waschmaschine (1) nach einem der Ansprüche 1 bis 12, wobei der Ausgang des zweiten Tanks (40) mit der Kammer (10) verbunden (78, 73) ist, selektiv durch eine Waschmittel-/Weichspülerlade (71) führend.

14. Waschmaschine (1) nach einem der Ansprüche 1 bis 13, wobei der Verdichter (103) in einem unteren Teil des Gehäuses (25) oder in einem oberen Teil des Gehäuses (25) unter dem Oberteil (20) untergebracht ist.

## Revendications

1. Machine (1) à laver comportant un caisson (25) et un dessus (20) autonome et autoporteur prévu pour s'ajuster audit caisson (25) et le fermer par le dessus, le dessus (20) étant formé comme une pièce prête à monter, prête à être montée sur le caisson (25), la machine (1) à laver renfermant :
- une chambre (10) destinée à recevoir des articles à laver,
- une pompe (15) à chaleur comportant un circuit (100) comportant un agent frigorigène, un premier échangeur (30, 101) de chaleur et un deuxième échangeur (40, 102) de chaleur, le premier échangeur (30, 101) de chaleur étant prévu pour chauffer ledit agent frigorigène et pour refroidir/solidifier un fluide prévu pour refroidir/se solidifier, le deuxième échangeur (40, 102) de chaleur étant prévu pour refroidir ledit agent frigorigène et pour chauffer de l'eau de processus à utiliser dans la chambre (10),
**caractérisée en ce que** le dessus (20) comporte au moins un élément parmi :
- une première cuve (30) prévue pour contenir une quantité dudit fluide prévu pour refroidir/se solidifier et renfermant une première partie (101) dudit circuit (100) d'agent frigorigène immergée dans celle-ci, matérialisant ledit premier échangeur de chaleur et
- une deuxième cuve (40) prévue pour contenir une quantité d'eau de processus destinée à être utilisée dans la chambre (10) et renfermant une deuxième partie (102) dudit circuit (100) d'agent frigorigène immergée dans celle-ci, matérialisant ledit deuxième échangeur de chaleur.

2. Machine (1) à laver selon la revendication 1, le module de dessus comportant en outre un organe (104) de détente dudit circuit (100) d'agent frigorigène.

3. Machine (1) à laver selon l'une quelconque des revendications 1 à 2, le module de dessus comportant en outre un tiroir (71) pour détergent.

4. Machine (1) à laver selon l'une quelconque des revendications 1 à 3, ladite ou lesdites cuves parmi lesdites première et deuxième cuves (30, 40) étant définies au moins en partie par une paroi supérieure (201) et une paroi inférieure (202) dudit dessus (20), et éventuellement par au moins une partie d'une paroi périphérique (203) et un ou plusieurs cloisons intérieures (204) de séparation dudit dessus (20).

5. Machine (1) à laver selon l'une quelconque des revendications 1 à 4, le dessus (20) comportant à la fois les première et deuxième cuves (30, 40) et les première et deuxième cuves (30, 40) étant définies par une paroi supérieure (201), une paroi inférieure (202), une paroi périphérique (203) dudit dessus et une cloison intérieure (204) de séparation, la cloison de séparation étant constituée d'un matériau thermiquement isolant.

6. Machine (1) à laver selon l'une quelconque des revendications 1 à 5, le fluide dans la première cuve (30) étant de l'eau.

7. Machine (1) à laver selon la revendication 6, la première cuve (30) possédant une entrée reliée sélectivement (74, 80) à la conduite d'eau (M) ou à une sortie de la chambre (10) destinée à recevoir des articles, éventuellement via un moyen de recirculation comme une pompe (81).

8. Machine (1) à laver selon l'une quelconque des revendications 6 à 7, la première cuve (30) possédant une sortie reliée sélectivement (73, 76) à la chambre (10) destinée à recevoir des articles.

9. Machine (1) à laver selon la revendication 8, la sortie de la première cuve (30) étant reliée sélectivement (73, 76) à la chambre (10) destinée à recevoir des articles par l'intermédiaire d'un tiroir (71) pour détergent/adoucissant.

10. Machine (1) à laver selon l'une quelconque des revendications 1 à 9, la deuxième cuve (40) possédant une entrée reliée sélectivement (75) à la conduite d'eau (M), et une sortie reliée sélectivement (77 ; 78, 73) à la chambre (10).

11. Machine (1) à laver selon l'une quelconque des revendications 1 à 9, la deuxième cuve (40) possédant une entrée reliée sélectivement (75, 79) à la conduite d'eau (M) et à une sortie de la chambre (10), et une sortie reliée sélectivement (77 ; 78, 73) à la chambre (10).

12. Machine (1) à laver selon l'une quelconque des revendications 1 à 11, des moyens (81) de circulation étant mis en place pour faire circuler l'eau à partir de la sortie de la chambre (10) et de l'entrée de la première ou de la deuxième cuve (30, 40).

13. Machine (1) à laver selon l'une quelconque des revendications 1 à 12, la sortie de la deuxième cuve (40) étant reliée (78, 73) à la chambre (10) en traversant sélectivement un tiroir (71) pour détergent/adoucissant.

14. Machine (1) à laver selon l'une quelconque des revendications 1 à 13, le compresseur (103) étant logé dans une partie inférieure du caisson (25) ou dans une partie supérieure du caisson (25), sous le dessus (20).
